Europäisches Patentamt

European Patent Office

Office européen des brevets

(11) Publication number: **0 293 804**
**A2**

## EUROPEAN PATENT APPLICATION

(21) Application number: 88108621.9

(22) Date of filing: 30.05.88

(51) Int. Cl.⁴: **G11B 15/60 , G11B 15/62 , G11B 23/04 , G11B 23/50**

(30) Priority: 01.06.87 IT 2074287

(43) Date of publication of application:
07.12.88 Bulletin 88/49

(84) Designated Contracting States:
AT BE CH DE ES FR GB GR IT LI NL

(71) Applicant: **Bordignon, Abramo**
**Via Palmiro Togliatti, 32**
**I-20030 Senago Milano(IT)**

(72) Inventor: **Bordignon, Abramo**
**Via Palmiro Togliatti, 32**
**I-20030 Senago Milano(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Presser element structure of the tapepresser leaf spring type, the tapecleaning presser type, and the like, particularly for magnetic supports.**

(57) The present invention relates ·to a presser element structure of the tape-presser leaf spring type, the tape-cleaning presser and the like, particularly for magnetic supports, which comprises a supporting body (1) associable proximate to a magnetic support and having at least one of its portions elastically pressable on said magnetic support. The peculiarity of the invention resides in the fact that it comprises, at least at said portion, a plurality of monofilaments (10) fixed, at one end, to said portion, said monofilaments (10), at their free end, being adapted for contact engagement with said magnetic support.

Fig. 1

EP 0 293 804 A2

## PRESSER ELEMENT STRUCTURE OF THE TAPE-PRESSURE LEAF SPRING TYPE, THE TAPE-CLEANING PRESSER TYPE, AND THE LIKE, PARTICULARLY FOR MAGNETIC SUPPORTS

The present invention relates to a presser element structure of the tape-presser leaf spring type, the tape-cleaning presser type and the like, particularly for magnetic supports.

As is known, in magnetic recording and playback systems, whether audio or video or digital, the sliding of the magnetic support in intimate contact with the fixed or rotating recording and playback heads or with other fixed or movable transmission or sliding means is considerably important. Consequently, the search for presser elements such as, for example, tape-presser leaf springs, tape-cleaning pressers and the like which are capable of ensuring a long life of the magnetic support, without causing its wear and without damaging in any way the recording and playback heads, has been increasingly developed.

Presser elements must also meet the requirement of keeping the magnetic support, generally constituted by a tape, free from dust, furthermore having a low friction coefficient, good anti-static characteristics and furthermore the possibility of assuming various configurations, without creating localized pressure variations due to the different shapes or configurations assumed.

Another aspect which the various presser elements must present is that of not creating a constriction in the natural sliding of the magnetic support, i.e. of not imparting translatory components to the tape different from those imparted for normal sliding.

Another peculiarity with which presser elements must comply is that of inhibiting the transport of any fibers which come loose due to the wear of the presser element.

The current state of the art provides various types of presser elements which are produced privileging one or the other of the above mentioned aspects, taking into account also the economic cost thereof.

Presser elements are known which have a felt in pure wool, exceptionally rabbit wool, while synthetic fibers are predominantly used so as to obtain a relatively compact felt.

This type of felt has the advantage of having a good friction coefficient, since the coefficient K is equal to 0.15-0.18; the felt furthermore features a good dust confinement which can be estimated at 7-8 $mm^3/cm^2$.

On the other hand this type of felt has the disadvantage of using fibers which have a relatively great length with easy possibility of breakage of said fibers.

Another disadvantage furthermore resides in the extremely high cost of the material used.

Another negative aspect furthermore resides in the fact that the presence of fibers having a random arrangement in the felt may cause a constriction in the sliding of the tape which causes sliding anomalies.

Another solution of the known art provides the use of a base, to be applied to the leaf spring or to the tape-cleaning presser, produced in foamed polyurethane; a sliding layer is then applied on said base.

The use of a foamed-polyurethane base provides good adaptability to the different profiles of the heads, but on the other hand it has a very large variation of the elasticity itself due to temperature variations, with a certain tendency to hydrolyze.

On the foamed polyurethane which constitutes the base, which has a very low cost, there is applied a sliding layer produced by means of a polyester film, coated or not with graphite, which has a good friction coefficient but allows no dust confinement.

Another sliding layer used is produced in non-woven fabric which has a relatively low dust confinement, assessable at 2-3 $mm^3/cm^2$, and has a relatively high friction coefficient since K = 0.2-0.22.

Another sliding layer is produced in conductive teflon, which has a good friction coefficient, since K = 0.15-0.18, and good antistatic characteristics, but does not allow dust confinement and has a relatively high cost.

Another known solution, applied most of all in tape-cleaning pressers and capable of discharging static electricity, is realized by means of a film in conductive plastic material, or rendered conductive by spreading graphite or the like or with a layer of conductive teflon. This type of execution has a good friction coefficient with K = 0.15-0.18, a medium-high cost and does not allow dust confinement.

Another type of known solution provides the realization of a synthetic felt which is the solution most often used in tape-presser leaf springs for audio cassettes. Said synthetic felt has an elastic behaviour similar to wool felt, a very low loss of fibers, acceptable friction, since K is approximately equal to 0.2, a good dust confinement, with a value of approximately 5-6 $mm^3/cm^2$, and a relatively low cost.

As can be therefore seen from the above described situation, the various adopted solutions have advantageous aspects to which there are opposed other aspects which are more negative, and the choice of one type or another depends in practice from the aspect which it is desired to privilege for the particular type of use.

The aim proposed by the invention is indeed to eliminate the disadvantages described above, by providing a presser element of the tape-presser leaf spring type, the tape-cleaning presser type, presser for discharging static charges from the tape and the like, which offers the possibility of combining, in a single execution, all the advantages which are currently found individually or in groups in the solutions of the known art.

Within the above described aim, a particular object of the invention is to provide a presser element the elastic pressure characteristics whereof are minimally modified even in the case of considerable elastic variation of the configuration of the support of said presser element.

Another object of the present invention is to provide a presser element which allows to obtain extremely low friction coefficients, together with the possibility of having extremely high dust confinement such as to attain values not currently found in similar products.

A further object of the present invention is to provide a presser element which has extremely high adaptability to the different shapes of fixed or rotating heads or of the transmission and sliding elements, with substantially constant specific pressures in each point of the surface of contact with the sliding magnetic support, with the consequent advantage of having an extremely reduced wear of the tape and of the gap in the playback or recording region.

Another object of the present invention is to provide a presser element which creates no constriction in the sliding of the tape, preventing therefore the occurrence of anomalous and incorrect movements which cause both playback and recording defects on said magnetic support.

A not least object of the present invention is to provide a structure of presser element which is easily obtainable starting from elements and materials commonly available commercially and which furthermore has a very reduced productive cost.

The above described aim, as well as the objects mentioned and others which will become apparent hereinafter, are achieved by a presser element structure of the tape-presser leaf spring type, the tape-cleaning presser type and the like, particularly for magnetic supports, comprising a supporting body associable proximate to a magnetic support and having at least one of its portions elastically pressable on said magnetic support, characterized in that it comprises, at least at said portion, a plurality of monofilaments fixed, at one end, at said portion, said monofilaments, at their free ends, being adapted for contact engagement with said magnetic support.

Further characteristics and advantages of the invention will become apparent from the description of some preferred but not exclusive embodiments of a presser element structure of the tape-presser leaf spring type, the tape-cleaning presser type and the like, particularly for magnetic supports, illustrated only by way of non-limitative example in the accompanying drawings, wherein:

figure 1 is a schematic perspective view of a presser element of the tape-presser leaf spring type, schematically applied to an audio cassette;

figure 2 is a schematic view of a layer of monofilament supporting material;

figure 3 is a perspective view of a tape-presser leaf spring with the monofilaments applied on a supporting layer applied by glueing to the supporting body;

figure 4 is a sectional view of the solution of figure 3;

figure 5 is a view of a tape-presser leaf spring with the monofilaments connected to a base body held by claws onto the supporting body;

figure 6 is a sectional view of the solution of figure 5;

figure 7 is a view of a tape-presser leaf spring with the monofilaments applied directly to the supporting body;

figure 8 is a sectional view of the solution of figure 7;

figure 9 is a view of a tape-presser leaf spring with a different configuration in the region of application of the monofilaments;

figure 10 is a view of a presser element of the type of a tape-cleaning presser or antistatic element particularly for video cassettes;

figure 11 is a schematic view of the presser element of figure 10 applied in a video cassette;

figure 12 is an elevation view of the presser element of figure 10 applied in the cassette;

figure 13 is a perspective view of the presser element on the side opposite to the surface bearing the monofilaments.

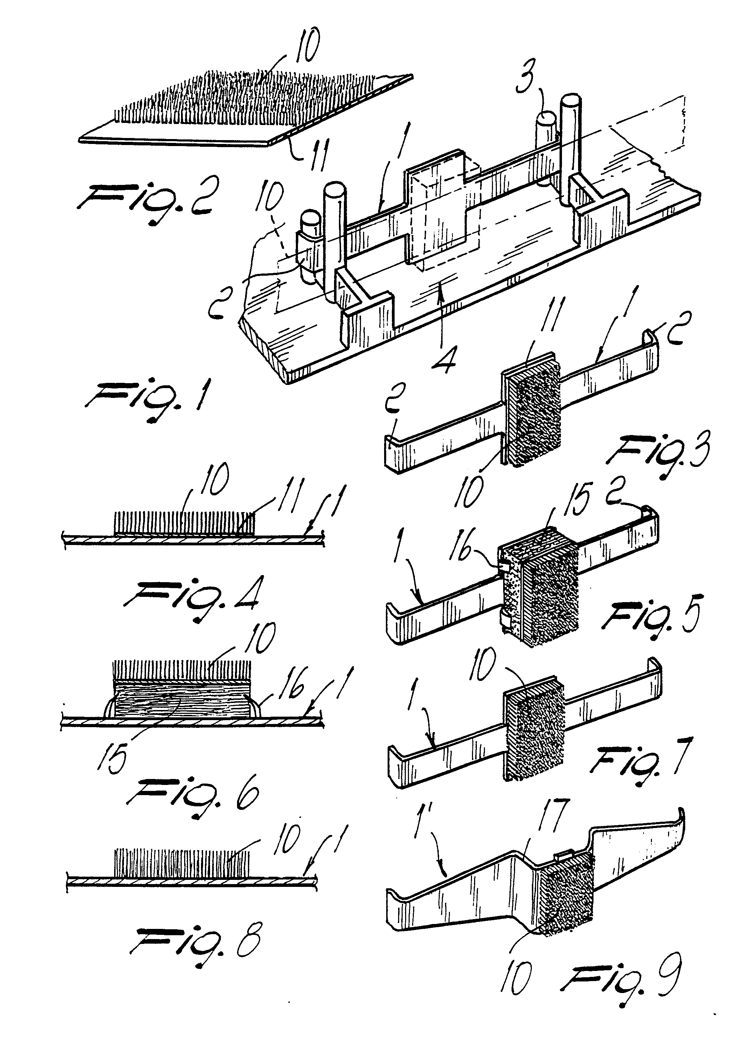

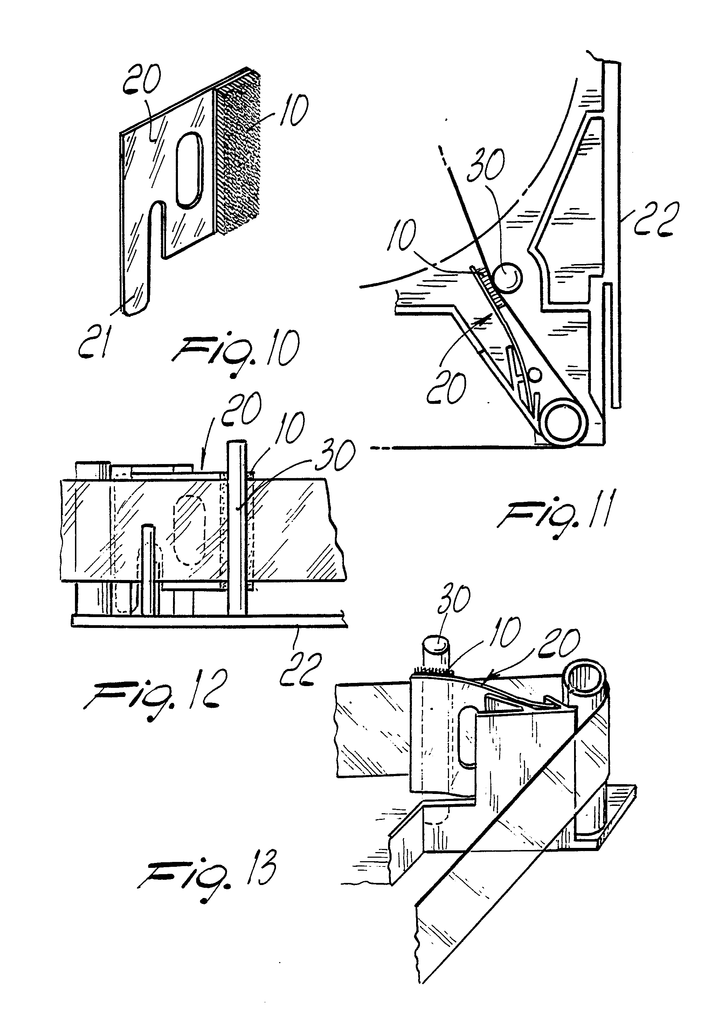

With reference to the above described figures, in particular to figures 1 to 9, a presser element is illustrated which is constituted by the tape-presser leaf spring which is commonly used in audio cassettes. Said leaf spring, as shown in figure 3, has a supporting body 1 which, as usual, is constituted by a lamina in metallic material with elasticity characteristics, which at its free ends has coupling elements, constituted for example by folded portions 2, which are fixable at retention pins 3 which are defined by the container of the cassette or the like, generally indicated at 4.

The peculiar characteristic of the invention resides in the fact that said leaf spring 1, in its central portion, or in any case in the portion which is elastically pressed on the magnetic support, which is constituted by the tape, has a plurality of monofilaments 10.

The monofilaments or monothreads in practice constitute a long and thin element which is embedded at one of its ends and is stressed so as to deform under combined bending and compressive stress. From experimental tests it has been established that in practice, for a top angle comprised between 20 and 80°, defined by the tangent at the terminal portion of the monothread, and the fixing plane of the monothread, there occurs a variation of the elastic force which is contained within 27%, i.e. a force variable by less than + or - 13% for a truly considerable camber, which can be estimated at approximately 40% of the length of the monothread.

To obtain said elements, monofilaments have been selected, cut to a predetermined measure by TOW, producing in practice a velveting, with synthetic fibers of quality, diameter, length and number of monothreads per cm$^2$ according to well-defined values.

As already previously mentioned, the necessity exists to have a low friction coefficient, good mechanical elasticity, and the possibility of using monothreads with presettable anti-static or conductivity characteristics. To meet these requirements, synthetic fibers of the polyamide, acrylic type, of the polyester and cellulose triacetate type, or possibly other fibers which have the same features, may be used.

As to the measures, the fibers, also by virtue of their greater availability on the market, have been selected in the category comprised between 0.2 tex and 0.9 tex which correspond to useful diameters comprised between 15 microns and 32 microns.

From the analysis of the various parameters of the fibers, i.e. diameter, elastic elongation modulus, in relation with the minimum camber of adaptability to the various configurations of the recording heads, which camber is of the order of 0.25 mm, and considering the average specific pressure recommended by the norms, assessable at approximately 1 g/mm$^2$, the selected limit values preferably provide the use of fibers with a diameter of 15 microns, useful length of 0.6 mm and number of monothreads assessable at approximately 400/mm$^2$, or possibly diameters of 20 microns, length of 0.9 mm, density of 200/mm$^2$, or possibly diameters of 32 microns, length of 1.6 mm and monothread density of 100 per mm$^2$.

The number, the diameter and the density of the monothreads are in any case freely selectable even in ranges outside the above mentioned ones, which are those capable of producing the best characteristics.

From experimental tests carried out, it is observed that the sliding friction coefficient K is comprised between 0.10 and 0.17, therefore with extremely optimum values, and furthermore there occurs a dust confinement with a value not observable in any of the currently adopted solutions.

Taking merely by way of example a polyamide fiber with diameter of 20 microns, length of 0.9 mm and density of 250 monothreads per mm$^2$, a space for dust confinement greater than 32 mm$^3$/cm$^2$ is obtained.

Said monothreads, selected according to the above described criteria, may be applied to a supporting layer indicated at 11 which, after being cut to size, is applied by glueing to the supporting body 1. The monothreads 10 may possibly be provided on a base body having a relatively high thickness, indicated at 15 in the drawing, which is retained by the supporting body by means of the claws 16 or possibly on a layer applied to the base body.

Another practicable solution consists of applying, as indicated schematically in figures 7 and 8, the monothreads directly on the portion of the supporting body which is pressed elastically against the magnetic support, simply by treating the affected surface in a manner similar to the treatment performed on the monofilament supporting layer, currently commercially available.

With this type of solution a drastic productive simplification is achieved, since it is not necessary to perform the successive application of an element with monofilaments to the supporting body constituted by the leaf spring, but it is possible to apply the monofilaments directly onto said leaf spring.

Similarly, the monofilaments may be applied by glueing or by direct application to a leaf spring or supporting body, indicated by the reference numeral 1', which has in its central portion a protruding region 17, producing a leaf spring configuration of the type constituting the object of a prior Italian published application (No. 20922 A/85 dated May 28, 1985), assumed included herein as reference.

The monofilaments thus arranged have high stability for the different shapes of the heads with substantially constant specific pressures in every point of the surface of contact with the sliding magnetic support.

This characteristic allows to have a lower wear of the tape and of the gap/head recording region, up to three times lower than with normal pressers or tape cleaners currently available.

This corresponds to an average life of the tape/head and tape/transmissions magnetic recording and playback systems which is at least doubled with respect to current systems.

Furthermore, the use of a monofilament which is disposed substantially perpendicular with respect to the tape and which is not connected to adjacent monofilaments causes no constriction in the movement of the tape to be imparted, since the monofilaments have their preponderant orientation orthogonal with respect to the sliding of the magnetic tape and their unitary reaction force is of a few milligrams and their adaptation to torsional movements of the flexed apex of the monothread occurs with reaction forces of a few micrograms.

Another important aspect of the invention resides in the fact that said monothreads have a very reduced cost with respect to previously mentioned currently used systems such as wool felt, synthetic felt and the like.

Another aspect not to be underestimated resides in the fact that the monothreads cannot be spontaneously hooked by any roughness or edge present on the magnetic support, so that there is no outward dispersion of monothreads or the like, nor any sliding anomalies.

It is known that to keep the life of tape/head magnetic sliding systems very high one must have very low friction values. It is known in tribology that, with equal employed materials, the friction coefficient and the specific pressure are mutually linked by an inverse correlation relation.

Currently, the average specific pressures recommended by international norms must be of a few grams per mm$^2$. In the case of the invention, regardless of the material of the interposed cushion, the element constituted by the monothreads allows to achieve very low friction values.

Friction values reduce considerably since the contact surface of the numerous monothreads per mm$^2$, arranged substantially uniformly on the entire surface, is much less than one thousandth of the affected surface and extremely high-density micropressures with considerably high localized specific pressures are therefore determined, such as to however determine very low average friction coefficients, advantageous for the specific use.

To the above it should be furthermore added that the invention allows, without modifications of the productive process, to choose conductive monothreads, constituted for example by carbon fibers or by polyamide fibers made conductive, for example, by graphite-coating, thus having the possibility of discharging the static electricity which accumulates.

This characteristic is advantageously usable in the case in which the presser element is constituted by the presser with tape-cleaning and static electricity elimination functions, which is schematically indicated in figures 10 to 13.

This type of presser element has a supporting body, generally indicated at 20, which has at one of its ends, for example, a tab 21 for coupling to the shell 22 of the cassette, generally of the video type, and at one free end it has a plurality of monofilaments, again indicated at 10, which may have the same characteristics already previously mentioned in the description of the leaf spring 1.

The monofilaments 10 are provided in a region which has an extension at least equal to the transverse extension of the tape.

Advantageously it is possible to provide the extension of the region affected by the monofilaments 10 for a greater portion with respect to the width of the tape so that at least part of the monofilaments 10 engages by contact with the sliding pin 30, which acts as abutment and resting element in the region where the tape cleaner 20 acts, so that it creates a contact bridge which discharges the static electricity directly onto the pivot; said electricity is exhausted through the system constituted by the pivot, the sensitive side of the tape and the final head. This characteristic is also observable in the previously described cases in which the presser applied to the leaf spring may affect the edges of the magnetic tape and discharge the static electricity onto the head.

Furthermore, with this type of arrangement it occurs that the longitudinal edges of the tape are also affected by the monothreads which perform both the so-called cleaning and the discharge of any electricity.

From what has been described above it can thus be seen that the invention achieves the intended aim and objects, and in particular the fact is stresssed that the provision of a presser element for magnetic supports in general, constituted by a plurality of monofilaments which are embedded at their base, allows to produce a system in which contact occurs in practice as combined bending and compressive stress on various monothreads, with the consequent advantage of having optimum pressure distribution, extremely advantageous friction coefficients, together with the possibility of having a dust confinement of exceptional value.

The invention thus conceived is susceptible to numerous modifications and variations, all of which are within the scope of the inventive concept.

Moreover all the details may be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Presser element structure of the tape-presser leaf spring type, the tape-cleaning presser type, and the like, particularly for magnetic supports, comprising a supporting body (1,20) associable proximate to a magnetic support and having at least one of its portions elastically pressable on said magnetic support, characterized in that it comprises, at least at said portion, a plurality of monofilaments (10) fixed, at one end, at said portion, said monofilaments (10), at the free end, being adapted for contact engagement with said magnetic support.

2. Presser element structure, according to claim 1, characterized in that said monofilaments (10) are arranged substantially orthogonally with respect to said supporting body (1).

3. Presser element structure, according to the preceding claims, characterized in that it comprises a supporting layer (11) to which said monofilaments (10) are fixed, said supporting layer (11) being rigidly connected to said supporting body (20).

4. Presser element structure, according to one or more of the preceding claims, characterized in that said monofilaments are associated with a base body (15) fixed to said supporting body (1).

5. Presser element structure, according to one or more of the preceding claims, characterized in that said supporting layer (11) to which said monofilaments (10) are fixed is associated with said base body (15).

6. Presser element structure, according to one or more of the preceding claims, characterized in that said base body (15) is connected to said supporting body (1) by means of claws (16) defined by said supporting body (1).

7. Presser element structure, according to one or more of the preceding claims, characterized in that said monofilaments (10) are applied directly to said supporting body (1).

8. Presser element structure, according to one or more of the preceding claims, characterized in that said monofilaments (10) have a diameter comprised between 15 microns and 32 microns, a useful length comprised between 0.6 mm and 1.6 mm and a monothread density comprised between 400 and 100 monothreads per mm$^2$.

9. Presser element structure, according to one or more of the preceding claims, characterized in that said monofilaments (10) are provided in electrically conductive material.

10. Presser element structure, according to one or more of the preceding claims, characterized in that said monofilaments (10) are provided in synthetic plastic material treated with an electrically conductive material.

11. Presser element structure, according to one or more of the preceding claims, characterized in that said monofilaments (10) affect a portion having an extension at least equal to the width of said magnetic support in a direction transverse to its sliding.

12. Presser element structure, according to one or more of the preceding claims, characterized in that said monofilaments (10) affect a portion protruding with respect to the width of said magnetic support to engage with the longitudinal edges of said magnetic support.

Fig.2

Fig.1

Fig.3

Fig.4

Fig.5

Fig.6

Fig.7

Fig.8

Fig.9

Fig. 10

Fig. 11

Fig. 12

Fig. 13